(19) Europäisches Patentamt

European Patent Office

Office européen des brevets

(11) **EP 0 368 576 B1**

(12) **EUROPEAN PATENT SPECIFICATION**

(45) Date of publication and mention
of the grant of the patent:
**31.01.1996 Bulletin 1996/05**

(51) Int. Cl.$^6$: **A01N 57/16**, A01N 25/28

(21) Application number: **89311421.5**

(22) Date of filing: **03.11.1989**

(54) **Insecticide comprising a suspension of microcapsules containing chlorpyrifos**

Insektizid, bestehend aus einer Suspension von Chlorpyrifos enthaltenden Mikrokapseln

Insecticide constitué d'une suspension de microcapsules contenant du chlorpyrifos

(84) Designated Contracting States:
**DE FR GB**

(30) Priority: **08.11.1988 JP 282098/88**

(43) Date of publication of application:
**16.05.1990 Bulletin 1990/20**

(73) Proprietor: **KUREHA KAGAKU KOGYO
KABUSHIKI KAISHA
Chuo-ku Tokyo 103 (JP)**

(72) Inventors:
• **Naoki, Makoto
Iwaki-shi Fukushima-ken (JP)**
• **Igarashi, Yuriko
Iwaki-shi Fukushima-ken (JP)**
• **Aoyagi, Shouzou
Iwaki-shi Fukushima-ken (JP)**

(74) Representative: **Woods, Geoffrey Corlett et al
London WC1R 5LX (GB)**

(56) References cited:
DE-A- 3 629 714          FR-A- 2 174 263
FR-A- 2 265 277          FR-A- 2 269 367
FR-A- 2 591 857          GB-A- 2 113 170
US-A- 4 696 822

• WPIL, FILE SUPPLIER, AN=86-335063, Derwent
Publications Ltd, London, GB; & JP-A-61 249 904
(NIPPON KAYAKU) 07-11-1986

## Description

The present invention relates to an insecticide comprising an aqueous suspension of microcapsules containing chlorpyrifos.

Chlorpyrifos (0,0-diethyl-0-3,5,6-trichloro-2-pyridyl-phosphorothioate) has a high insect-killing effect, in particular, termite-killing effect, and is used as an insecticide in the form of a dust, emulsion, oily chemical or wettable powder. However, since chlorpyrifos has such a strong acute toxicity as to lower the cholinesterase in the blood, not only must extreme care be taken to the use thereof but also the health of the workers is disadvantageously injured by repetitive use thereof. When the emulsion is sprayed on concrete, chlorpyrifos is decomposed in a short time due to the strong alkalinity. The termite-killing effect or termite-repelling effect of the chlorpyrifos therefore disappears.

JP-A-61-33230 (1986) and US-A-4,686,822, for example, disclose microencapsulated chlorpyrifos. In the microencapsulated chlorpyrifos disclosed in US-A-4686822, a material consisting of a polycationic water-soluble nitrogen-containing compound such as gelatin and a hardening agent is used as the capsule wall material, and the product is in the form of granules. However, it is not suitable for use as a water-soluble suspension, because the release property in water (the release of chlorpyrifos from microcapsule to water) is too large for sufficient reduction in the toxicity. On the other hand, in the microencapsulated chlorpyrifos disclosed in JP-A-61-33230 (1986), it is said that since polyurea or polyurethane is used as the wall substance and the release property in water is so small that chlorpyrifos is stable even in the soil, the termite-killing effect or termite-repelling effect is not exhibited until the microcapsule is broken or eaten by a termite. In addition, when these microcapsulated chemicals are formed into an aqueous suspension, the water dispersibility and the re-dispersibility after it is diluted and preserved are poor, and the foaming at the time of dilution is so large that the operability is bad.

The present invention seeks to overcome the above-described problems in the prior art and to provide an insecticide comprising an aqueous suspension of microcapsules of chlorpyrifos which can be put to practical use as an insecticide, in particular as a termiticide or termite repellent with the toxicity thereof reduced and the usability and the effectiveness thereof improved.

GB-A-2,113,170 discloses microencapsulated agricultural chemicals, wherein the microcapsule wall comprises a polycondensate, prepared in the presence of an anionic surfactant of a water-soluble cationic urea resin and at least one prepolymer of formaldehyde and at least one of urea, melamine and thiourea.

FR-A-2,265,277 discloses aqueous dispersions of polymer-encapsulated insecticides wherein 0.1 to 0.5 wt% of xanthan gum is used as a dispersing agent.

The present invention provides an insecticide comprising an aqueous suspension containing

(i) 100 parts by weight of microcapsules comprising chlorpyrifos as a core substance and a wall substance obtained by polycondensing a urea-formaldehyde prepolymer and/or melamine formaldehyde prepolymer in the presence of a water soluble cationic urea resin and an anionic surfactant,
(ii) 0.5 to 2.0 parts by weight of xanthan gum, and
(iii) 0.5 to 25 parts by weight of a surfactant,
the sedimentation coefficient of the diluted suspension being not less than 80% and the re-dispersibility of the said microcapsulated chlorpyrifos being not more than 5 times when a suspension containing 2.5g of chlorpyrifos is diluted with water to a volume of 250 ml.

The re-dispersibility of the insecticide of the present invention after preservation is excellent.

The sedimentation coefficient in the present invention is an index of the dispersibility of chlorpyrifos when the insecticide comprising an aqueous suspension of microcapsules comprising chlorpyrifos (hereinunder referred to as "encapsulated insecticide") is diluted to a concentration for use. The sedimentation coefficient is determined as follows. An encapsulated insecticide containing 2.5 g of chlorpyrifos is charged in a 250-mℓ measuring cylinder with a plug, and water is added up to the gauge mark to produce a diluted suspension. The measuring cylinder is inverted upside down at a rate of 30 times per minute so as to stir the diluted suspension for 1 minute. 1 hour after, the dispersion is sampled from the central portion of the measuring cylinder by a 25-mℓ transfer pipette to measure the amount of chlorpyrifos therein and the ratio of uniform dispersion is obtained as the sedimentation coefficient from the following formula:

$$\text{Sedimentation coefficient (\%)} = \frac{\text{amount of chlorpyrifos in the sampled suspension}}{\text{amount of chlorpyrifos in the measuring cylinder} \times 0.1} \times 100$$

The closer to 100% the sedimentation coefficient, the better. If it is not less than 80%, it is sufficient for practical use.

The re-dispersibility is determined as follows. The diluted suspension of the encapsulated insecticide obtained in the above-described way is allowed to stand for 24 hours. The 250-mℓ measuring cylinder with a plug is inverted upside down at a rate of 30 times per minute so as to disperse the precipitated capsules. The re-dispersibility is represented by the number of times of inversions of the measuring cylinder is repeated until all the precipitated capsules have risen from the bottom. In an ordinary termite repelling operation, it is hardly ever the case that all the diluted suspension is used up at one time, so that it is necessary to re-disperse the capsules to use the remainder which is kept. The capsules are therefore required to be easily re-dispersed. The diluted suspension in which all the capsules rise from the bottom within 5 inversions of the measuring cylinder is suitable for using the preserved remainder.

The present invention will now be explained in further detail.

Chlorpyrifos is encapsulated by a following process. That is, chlorpyrifos is molten and dispersed in an aqueous medium with a part or the entire part of a wall substance component dissolved or dispersed therein in the presence of an anionic surfactant so that the size of a droplet is 2 to 30 μm, and the wall substance component is polycondensed on the interface of the droplet. It is necessary that the temperature of the reaction system at this time is not lower than the melting point (42 to 43.5°C) of chlorpyrifos. The thus-produced capsule preferably contains 50 to 90 wt%, more preferably 75 to 85 wt%, of chlorpyrifos. A water-soluble cationic urea resin, urea-formaldehyde prepolymer (hereinunder referred to as "UF prepolymer") or melamine formaldehyde prepolymer (hereinunder referred to as "MF prepolymer") or a mixture of UF prepolymer and MF prepolymer are usable as the wall substance component.

A microcapsule slurry in accordance with the present invention is produced by the following process.

Molten chlorpyrifos is first added to an aqueous mixture solution containing a water-soluble cationic urea resin and an anionic surfactant while the pH is adjusted to 4 to 5, and emulsified by an appropriate means such as a homogenizer, agitator or ultrasonic waves so as to have droplets of an appropriate size, such as 2 to 30 μm.

A resin prepolymer is added to the mixture solution before, during or after emulsification at one time or several times separately. The weight ratio of the resin prepolymer to chlorpyrifos is preferably 1 to 0.1 : 1. Emulsification is carried out at a pH of 3.5 to 5, and at a temperature of 45 to 70°C, preferably 45 to 60°C.

The emulsion with the resin prepolymer added thereto is brought into reaction (polycondensation) for 15 to 25 hours under gentle stirring. Thereafter, the pH is adjusted to 2.5 to 3.0 and the emulsion is further brought into reaction at 30 to 60°C for 40 to 50 hours, thereby terminating the encapsulation.

The UF prepolymer used as the resin prepolymer in the present invention is a methylolurea selected from methylolureas ranging from monomethylolurea to tetramethylolurea, a mixture thereof having different degrees of hydroxymethylation or a mixture of a methylolurea, urea and formaldehyde. Alternatively, the UF prepolymer may be an oligomer obtained by further promoting the reaction between urea and formaldehyde, namely a transparent colloidal solution with a hydrophilic group having a polymerization degree of 2 to 5.

The MF prepolymer is a methylolmelamine selected from methylolmelamines ranging from monomethylolmelamine to hexamethylolmelamine, a mixture thereof having different degrees of hydroxymethylation or a mixture of a methylolmelamine, melamine and formaldehyde. Alternatively, the MF prepolymer may be an oligomer obtained by further promoting the reaction between melamine and formaldehyde, namely a transparent colloidal solution obtained by treating methylolmelamine having a polymerization degree of 2 to 10 with, for example, hydrochloric acid. The MF prepolymer is easily produced by heating a mixture of melamine and formalin under an alkaline condition and the thus-obtained aqueous reaction solution can be used for encapsulation as it is.

The cationic water-soluble urea resin used in the above-described encapsulation is obtained by introducing a cationic modifier into a urea-formaldehyde resin. For example, the water-soluble cationic urea resin is easily obtained by polycondensing a urea-formaldehyde prepolymer with a modifier such as tetraethylene pentamine, diaminoethanol, dicyanediamide, diethylaminoethanol or guanylurea by a known method. The weight ratio of the resin prepolymer to the water-soluble cationic urea resin is preferably 1 : 0.01 to 2.0.

The anionic surfactant is exemplified by salts of fatty acids, higher alcohol sulfates and salts of alkylaryl sulfonates, and is preferably sodium dodecylbenzene sulfonate.

In the above-described way, an aqueous suspension of microcapsules of chlorpyrifos is obtained.

When an aqueous suspension of microcapsules of chlorpyrifos is used as a termiticide or termite repellent, it is necessary to adjust the release property in water of the core substance from the microcapsules and the dispersibility, the re-dispersibility and the sedimentation coefficient of the microcapsules so as to reduce the influence of the insecticide on the human body as much as possible and to improve the operability. It is possible to reduce the release property in water of chlorpyrifos from the microcapsules to not more than 2.0 ppm, preferably 0.3 to 2.0 ppm, more preferably 0.3 to 1.5 ppm, by setting the ratio of the core substance to the a resin prepolymer to 1 : 0.1 to 1, the ratio of the water soluble cationic urea resin to the anionic surfactant to 1 : 0.025 to 0.03, and the aging time to not less than 10 hours after the formation of microcapsules. The reduction of the toxicity and the effectiveness of the insecticide are dependent on the release property in water of chlorpyrifos when the encapsulated insecticide is diluted with water, and the smaller the release property in water is, the smaller are the toxicity and the effectiveness. However, 1 ppm of chlorpyrifos in an atmosphere exhibits a sufficient termite-killing effect.

The release property in water is measured by the method described in Example 6 (Evaluation of release property in water), which is described later.

The problem confronted during use of the encapsulated insecticide is that when encapsulated insecticide is diluted for spraying, only the chlorpyrifos capsules are precipitated during spraying. In addition, in the case of reusing the spraying liquid which has been left and preserved, it is necessary to uniformly re-disperse the precipitated chlorpyrifos capsules. In a conventional encapsulated insecticide, this takes considerable labour and is difficult. It is therefore necessary to design for preventing the precipitation and separation of the chlorpyrifos capsules in the suspension during spraying and facilitating the re-dispersion of the capsules which have been precipitated during temporary preservation.

As a result of studies undertaken by the present inventors to solve these problems, encapsulated chlorpyrifos which satisfies the conditions of a sedimentation coefficient of not less than 80% and a re-dispersibility of not more than 5 times and which can therefore be put to practical use has been obtained by adding 0.5 to 2.0, preferably 0.5 to 1.0, parts by weight of xanthan gum and 0.5 to 25, preferably 1 to 10, parts by weight of a surfactant as a dispersant based on 100 parts by weight of microcapsules.

Xanthan gum is a polysaccharide of a high molecular weight produced from dextrose as the main material by the fermentation of xanthomonas campestris bacillus and is used, for example, as a water-soluble thickening agent, gelatinizing agent, or emulsifier.

If the amount of xanthan gum added as the dispersant is less than 0.5 parts by weight based on 100 parts by weight of microcapsules, the above-described conditions are not satisfied. On the other hand, addition of more than 2.0 parts by weight of xanthan gum is not economical. There is no problem in using xanthan gum together with another water-soluble dispersant such as guar gum, hydroxyethyl cellulose or polyvinyl alcohol.

As the surfactant, anionic surfactants such as the sodium salt of a polyalkylene glycol disulfate, the sodium salt of a naphthalenesulfonate-formalin condensate and sodium salt of a polyoxyethylenealkylphenol ether sulfonate, and nonionic surfactants such as polyoxyethylenelauryl ether and polyoxyethylenenonylphenyl ether are suitable. These may be used either singly or in the form of a mixture. If the amount of surfactant added is not more than 0.5 parts by weight based on 100 parts by weight of microcapsules, the above-described conditions are not satisfied. On the other hand, addition of not less than 25 parts by weight of a surfactant is uneconomical. The appropriate amount of surfactant added is determined in this range in accordance with the type thereof.

The release property in water, dispersibility and re-dispersibility, for example, of the encapsulated insecticide are influenced by the pH. The pH of a suspension of the microcapsules immediately after production is not more than 3, but it is preferable to adjust the pH to 4 to 7 by adding an aqueous sodium hydroxide solution or aqueous ammonia.

For use of the encapsulated insecticide of the present invention in cold districts, propylene glycol, ethylene glycol or diethylene glycol, for example, may be added without any trouble. It is also possible to add a scent in order to prevent the slightly remaining odor.

The concentration of the microcapsules in the aqueous suspension in the encapsulated insecticide of the present invention is preferably 10 to 50 wt%, more preferably 15 to 40 wt%.

In the encapsulated insecticide according to the present invention, chlorpyrifos is microencapsulated by a specific wall substance, so that the toxicity of chlorpyrifos is reduced and the effect of the insecticide is excellent. In addition, since the encapsulated insecticide of the present invention is an aqueous suspension containing an appropriate amount of xanthan gum, surfactant and chlorpyrifos capsules, the water dispersibility, water eluation power, and the re-dispersibility after being diluted and preserved are good and the foaming at the time of dilution is small.

The encapsulated insecticide of the present invention has a slow-release property in air and exhibits an excellent termite-killing effect and termite-repelling effect. Chlorpyrifos easily decomposes when it comes into contact with concrete. However, when the encapsulated insecticide of the present invention is sprayed on concrete, since the chlorpyrifos is scarcely brought into direct contact with strong alkaline concrete, it is hardly decomposed at all. Accordingly, the encapsulated insecticide of the present invention also retains the termite-killing effect and the termite-repelling effect for a long term even when it is sprayed on concrete. In addition, since the capsule wall substance in the present invention is decomposed by soil bacteria, the release of chlorpyrifos is accelerated when it is sprayed on the soil. In any case, the encapsulated insecticide of the present invention acts before it is broken or eaten by termites and retains the effect for a long term.

The encapsulated insecticide of the present invention has an excellent termite-killing effect as described above, and it goes without saying that the insecticide also has an excellent effect against other harmful insects such as cockroaches, ticks and fleas.

The present invention is now further explained in the following Examples.

Example 1

Example 1 illustrates a process for preparing microcapsules which may be used in the insecticide of the present invention.

Production of a resin prepolymer as a wall substance:

63 g (0.5 mol) of melamine was added to and mixed with 171.5 g (2.0 mol) of an aqueous 35 wt% formaldehyde solution with the pH adjusted to 9.0 by an aqueous 2% NaOH solution. The mixture was brought into reaction at 70°C, and immediately after the melamine dissolved, 234.5 g of water was added, the mixture being stirred for 3 minutes as it was to prepare an aqueous solution of an MF prepolymer.

Separately from this, 150 g (2.5 mol) of urea was added to and mixed with 386 g (4.5 mol) of aqueous 35 wt% formaldehyde solution with the pH adjusted to 8.0 by triethanolamine. The mixture was brought into reaction at 70°C for 1 hour to prepare an aqueous solution of a UF prepolymer.

Microcapsulation:

120 g of U-RAMIN® p-1500 (produced by Mitsui Toatsu Chemicals Inc.), which is a water soluble cationic urea resin, 900 g of water, 45 g of aqueous 10% triethanolamine solution and 450 g of the aqueous solution of the MF prepolymer and 450 g of the aqueous solution of the UF prepolymer prepared in the preceding processes were mixed and the pH of the mixture solution was adjusted to 4.2 by an aqueous 25% citric acid solution. 13.5 g of aqueous 10% Neopelex® (sodium alkylbenzene sulfonate: produced by Kao Corporation) solution was further added thereto.

1530 g of chlorpyrifos which was molten and maintained at 45°C was added to the mixture solution, and emulsified by a homogenizer so that the diameter of a droplet was 2 to 10 μm. The mixture was slowly stirred while maintaining the temperature at 50°C, and at 10 minutes and 3 hours after the start of stirring, 1 ℓ of 50°C hot water was added respectively. 24 hours after the start of stirring, the pH of the mixture was adjusted to 2.8 by an aqueous 25% citric acid solution, and 48 hours after the start of stirring, the microcapsulation was completed.

The average particle diameter of the thus-obtained microcapsules was 7.5 μm. Thus, a suspension of microcapsules of 25.4 wt% of chlorpyrifos (31.7 wt% in terms of microcapsules) was obtained.

Example 2

While 980 g of the suspension of the microcapsules obtained in Example 1 was gently stirred, the pH thereof was adjusted to 6 by an aqueous 20% sodium hydroxide solution. The mixture was heated to 50°C under stirring, and 2.3 g of Kelzan® S (xanthan gum: imported and sold by Sansho K.K.), 33.3 g of Newcol® 240 (sodium salt of polyalkylene glycol disulfate, effective ingredient: 30%: produced by Nihon Nyukazai K.K.) and 208.9 g of water were added thereto. The mixture was stirred for 2 hours to obtain the encapsulated insecticide. The amount of microcapsules in the encapsulated insecticide was 25.0 wt%.

Example 3

The encapsulated insecticide of chlorpyrifos was obtained in the same way as in Example 2 except that 2.0 g of Kelzan® S and 10 g of PVA (polyvinyl alcohol, Poval® PVA105: produced by Kuraray Co., Ltd.) were used in place of 2.3 g of Kelzan® S and the amount of water was changed to 199.2 g.

Example 4

The encapsulated insecticide of chlorpyrifos was obtained in the same way as in Example 2 except that 20 g of Demol® N (sodium salt of a naphthalenesulfonate-formalin condensate: produced by Kao Corporation) was used in place Newcol® 240 and the amount of water was changed to 129.3 g.

Example 5

The encapsulated insecticide was obtained in the same way as in Example 2 except that 15 g of Newcol® 504 (polyoxyethylenenonylphenyl ether: produced by Nihon Nyukazai K.K.) was used in place of Newcol® 240 and the amount of water was changed to 134.3 g.

Comparative Example 1

185 g of water was added to 788 g of the suspension of the chlorpyrifos capsules obtained in Example 1, and the pH of the mixture was adjusted to 6 by an aqueous 20% sodium hydroxide solution to obtain an encapsulated insecticide.

Comparative Example 2

An encapsulated insecticide was obtained in the same way as in Example 2 except that 5 g of F100MC® (carboxymethyl cellulose: produced by Sanyo Kokusaku Pulp Co., Ltd.) was used in place of Kelzan® S and the amount of water was changed to 206.2 g.

Comparative Example 3

An encapsulated insecticide was obtained in the same way as in Example 2 except that the amounts of Newcol®
240 and water were changed to 4 g and 238.2 g, respectively.

Comparative Example 4

An encapsulated insecticide was obtained in the same way as in Example 2 except that 81.0 g of Hitenol® NE-05
(polyoxyethylenealkyl ether sulfate: produced by Dai-ichi Kogyo Seiyaku Co., Ltd.) was used in place of the 33.3 g of
Newcol® 240, and the amount of water was changed to 161.2 g.

Example 6 (Evaluation of release property in water)

2.5 g as chlorpyrifos in the encapsulated insecticides obtained in Examples 2 to 5 and Comparative Examples 1 to
3 were respectively charged into a triangle flask with a plug and 250 m$\ell$ of distilled water was added thereto. After the
flask was thoroughly shaken to mix the capsules and distilled water, the flask was put into an oven at 50°C and allowed
to stand for 24 hours. 1 m$\ell$ of the supernatant was sampled into a sampling bottle with 0.5 m$\ell$ of acetonitril charged
therein in advance and the concentration of chlorpyrifos was analyzed by liquid chromatography. The results are shown
in Table 1.

Example 7 (Evaluation of the operability of encapsulated insecticide)

12.5 g of the encapsulated insecticides obtained in Examples 2 to 5 and Comparative Examples 1 to 3 were respectively charged into a 100-m$\ell$ beaker. After 50 m$\ell$ of water was added thereto, the microcapsules were thoroughly dispersed with a glass rod. The dispersion was charged into a 250-m$\ell$ measuring cylinder with a plug and diluted with water
so that the total volume was 250 m$\ell$. 15 minutes after dilution, the measuring cylinder was inverted upside down at a
rate of 30 times per minute so as to stir the diluted suspension for 1 minute.

(Foaming property)

The height of the foam was measured both immediately after the stop of stirring and 1 hour after the stop of stirring
and was regarded as the criteria of the foaming property and the defoaming speed. From the point of view of the termite-
killing operability, the smaller the foaming and the faster the defoaming speed, the better. The results are shown in Table 1.

(Dispersibility)

1 hour after the dispersion was stirred by inverting the cylinder, the dispersion was sampled from the central portion
of the measuring cylinder by a 25-m$\ell$ transfer pipette to analyze the amount of chlorpyrifos therein by gas chromatography. The dispersibility was represented as the

$$\text{Sedimentation coefficient (\%)} = \frac{\text{amount of chlorpyrifos in the sampled suspension}}{\text{amount of chlorpyrifos in the measuring cylinder} \times 0.1} \times 100$$

(Re-dispersibility)

The above described dispersion stirred by inverting the cylinder was allowed to stand for 24 hours, and thereafter
the cylinder was inverted again upside down to count the number of times of inversions of the measuring cylinder repeated
until all the precipitated capsules had risen from the bottom. The results are shown in Table 1.

Table 1

| | Foaming and defoaming property (mm) | | Sedimentation coefficient (%) | Re-dispersibility (time) | Release property (concentration of chlorpyrifos) (ppm) |
|---|---|---|---|---|---|
| | Immediately after the stop of stirring | 1 hour | | | |
| Ex. 2 | 40 | 7 | 91 | 3 | 0.6 |
| 3 | 38 | 7 | 95 | 2 | 0.6 |
| 4 | 20 | 0 | 84 | 5 | 0.5 |
| 5 | 50 | 18 | 83 | 4 | 0.6 |
| Comp. 1 | 26 | 0 | 5 | 3 | 1.0 |
| 2 | 20 | 3 | 86 | 12 | 0.7 |
| 3 | 30 | 5 | 63 | 8 | 0.6 |
| 4 | 85 | 70 | 78 | 5 | 0.7 |

Example 8

The encapsulated insecticide produced in Example 2 was diluted with water to a predetermined concentration. 1 mℓ of the diluted insecticide was applied to the center of circular filter paper 90 mm in diameter, and was dried with air for 24 hours. The filter paper was put into the bottom portion of a container of 90 mm in inner diameter and 120 mm in height, and 30 worker termites were put into the container. 24 hours after, the ratios of the populations which were dead, turned over and healthy were obtained. The container was put into an oven controlled to have a temperature of 28 ± 1°C and a humidity of not less than 70%. The results are shown in Table 2.

Table 2

| Concentration of chlorpyrifos | Ratios of populations (%) | | | Remarks |
|---|---|---|---|---|
| | Dead | Turned over | Healthy | |
| 1 ppm | 0 | 9.9 | 90.1 | All died on the fourth day |
| 5 ppm | 70 | 30 | 0 | All died on the second day |
| 10 ppm | 100 | 0 | 0 | All died in 10 hours |
| 50 ppm | 100 | 0 | 0 | All died in 6 hours |
| 0 ppm | 0 | 0 | 100 | |

Example 9

Tests of the acute oral toxicity and the acute dermal toxicity of the encapsulated insecticide produced in Example 2 and the acute toxicity thereof to fish were carried out as follows. The results are shown in Table 3.

Testing method

A group of 5 ICR male mice (5 weeks old) and a group of 5 Wister male rats (8 weeks old) were used for the acute oral toxicity test and the acute dermal toxicity test, respectively. Tests were carried out to obtain $LD_{50}$ values in accordance with the toxicity guidance of agricultural chemicals (Agricultural production No. 59 - 4200) (Notification of Director-General, Agricultural Production Bureau, 59 Nohsan No. 4200 dated January 28, 1985) issued by the Agricultural and Fisheries Ministry. The test for acute toxity to fish was carried out using groups of carp, each group consisting of 10 carp, in accordance with the Circular Notice No. 2735 issued by Director of the Agricultural Administration Bureau in the Agricultural and Fisheries Ministry to obtain the $TL_m$ of each group. The results are shown in Table 3.

Table 3

| | Acute oral toxicity LD$_{50}$ mg/kg | Acute dermal toxicity LD$_{50}$ mg/kg | Toxicity to fish TL$_m$ (48 h) ppm |
|---|---|---|---|
| Ex. 2 | 5,000 or more | 2,000 or more | 173 |
| Technical | 178 | 202 | 0.13 |

Example 10

The encapsulated insecticide produced in Example 2 was diluted with water so that the amount of chlorpyrifos was 1 wt%. Separately from this, 80 g of concrete (obtained by adding 16 parts by weight of water to 100 parts by weight of dried concrete not hardened (produced by K.K. Miyuki) and kneading them) was charged into a laboratory dish 90 mm in diameter, and levelled. The laboratory dish was put into a hot-air circulation type oven at 30°C so as to harden the concrete for 2 days. 19 mℓ (3 ℓ/m²) of the encapsulated insecticide diluted with water so that the concentration of chlorpyrifos was 1 wt% was added to the hardened concrete, covered with an aluminium foil and held in the oven at 30°C. The ratio of chlorpyrifos remaining 90 days after was 93 wt%. Almost all the microcapsules remained on the surface of the concrete.

Comparative Example 5

Chlorpyrifos emulsion (LENTREK® 40EC: produced by Dow Chemical) was diluted with water so that the concentration of chlorpyrifos was 1 wt%. In the same way as in Example 10, 19 mℓ of the emulsion was added to the concrete hardened in a laboratory dish. The concrete was covered with an aluminium foil and held in the oven of 30°C for 90 days. The ratio of chlorpyrifos remaining 90 days after was 30 wt%.

In this case, all the concrete was pulverized and shaken for 20 hours after 100 mℓ of acetone was added thereto. Thereafter, the mixture was filtered through No. 5C filter paper. 100 mℓ of acetone was further added to the residue and shaken for 20 hours. Thereafter, the mixture was filtered. Both filtrates were mixed and diluted so that the total volume was 250 mℓ and the amount of chlorpyrifos was measured by high-speed liquid chromatography.

In the case of the extraction on the surface of the concrete with acetone, almost no chlorpyrifos was measured.

Example 11

Into each of the laboratory dishes with the encapsulated insecticide in Example 10 and the chlorpyrifos emulsion in Comparative Example 5, respectively, which had been held in the oven at 30°C for 90 days, 30 worker termites were charged and allowed to stand at room temperature. 24 hours after, the mortality rate was examined. The results are shown in Table 4. While all termites were dead in the laboratory dish in Example 10, only 1 termite was dead and 2 termites had turned over in Comparative Example 5.

Table 4

| | Number of termites | | | Rate of healthy termites |
|---|---|---|---|---|
| | Dead | Turned over | Healthy | |
| Ex. 10 | 30 | 0 | 0 | 0 |
| Comp. 5 | 1 | 2 | 27 | 90 |

Example 12 (Test of the release property in soil)

7.5 g of the encapsulated insecticide produced in Example 2 was dispersed in 100 mℓ of water, and 1 mℓ of the dispersion was added to 30 g of soil (sand soil of Mt. Kannan) which had been put into a 100-mℓ beaker, and thoroughly mixed therewith.

Separately from this, 1500 mg of the chlorpyrifos was dissolved into 100 mℓ of acetone and 1 mℓ of the solution was added to 30 g of soil (same as above) and thoroughly mixed therewith.

The beaker was covered with aluminium foil, and water was sometimes sprayed on the soil to prevent the soil from drying. 65 days after, the amount of chlorpyrifos in the beaker was measured.

In order to measure the total amount of chlorpyrifos, 150 mℓ of acetone and 2 mℓ of concentrated hydrochloric acid was added to 30 g of the soil. The mixture was refluxed under heating in a water bath at 65°C for 1 hour, and after cooling filtered through No. 5C filter paper. The residue was further washed with 100 m$\ell$ of acetone, and diluted so that the total volume was 250 m$\ell$ to measure the amount of chlorpyrifos by high-speed liquid chromatography.

The amount of chlorpyrifos liberated was measured in the following manner. A mixture solvent of methanol and water (60/40) was added to 30 g of the soil. After the mixture was shaken for 10 minutes, the mixture was filtered through No. 5C filter paper. The residue was further washed with 100 m$\ell$ of the mixture solvent and diluted so that the total volume was 250 m$\ell$ to measure the amount of chlorpyrifos.

| Amount[*] of chlorpyrifos remaining in the soil (wt%) | | |
|---|---|---|
| | Total amount of chlorpyrifos | Amount of liberated chlorpyrifos |
| Encapsulated insecticide | 69 | 52 |
| Chlorpyrifos technical | 41 | - |

* Rate based on the original amount

As is obvious from this table, it was found that both the total amount of chlorpyrifos remaining in the soil and the amount of chlorpyrifos liberated from the microcapsules were larger in the encapsulated insecticide than in the nonencapsulated chlorpyrifos.

## Claims

1. An insecticide comprising an aqueous suspension containing

   (i) 100 parts by weight of microcapsules comprising chlorpyrifos as a core substance and a wall substance obtained by polycondensing a urea-formaldehyde prepolymer and/or melamine formaldehyde prepolymer in the presence of a water-soluble cationic urea resin and an anionic surfactant,
   (ii) 0.5 to 2.0 parts by weight of xanthan gum, and
   (iii) 0.5 to 25 parts by weight of a surfactant, the sedimentation coefficient of the diluted suspension being not less than 80% and the re-dispersibility of the said microcapsulated chlorpyrifos being not more than 5 times when a suspension containing 2.5g of chlorpyrifos is diluted with water to a volume of 250 ml.

2. An insecticide according to claim 1, wherein the amount of chlorpyrifos in the said microcapsules is from 50 to 90 wt%.

3. An insecticide according to claim 1 or 2, wherein the said microcapsules are present in the said aqueous suspension is an amount of from 10 to 50 wt%.

4. An insecticide according to any one of the preceding claims, wherein the ratio of chlorpyrifos to the said prepolymer is from 1:0.1 to 1:1 by weight, the ratio of the said prepolymer to the said water-soluble cationic urea resin is from 1:0.01 to 1:2.0 by weight and the ratio of the said water-soluble cationic urea resin to the said anionic surfactant is from 1:0.025 to 1:0.03 by weight.

5. An insecticide according to any one of the preceding claims, wherein the release property in water of the said microencapsulated chlorpyrifos is from 0.3 to 2.0 ppm.

6. Use of an insecticide according to any one of the preceding claims as a termiticide or a termite repellent.

## Patentansprüche

1. Insektizid, das eine wäßrige Suspension umfaßt, welche enthält

   (i) 100 Gewichtsteile Mikrokapseln mit Chlorpyrifos als Kernsubstanz und einer Wandsubstanz, die durch Polykondensation eines Harnstoff-Formaldehyd-Prepolymeren und/oder Melamin-Formaldehyd-Prepolymeren in Gegenwart eines wasserlöslichen kationischen Harnstoffharzes und eines anionischen oberflächenaktiven Mittels erhalten wurde,
   (ii) 0,5 bis 2,0 Gewichtsteile Xanthan und
   (iii) 0,5 bis 25 Gewichtsteile eines oberflächenaktiven Mittels,
   wobei der Sedimentationskoeffizient der verdünnten Suspension nicht weniger als 80% beträgt und die Wieder-Dispergierbarkeit des mikroverkapselten Chlorpyrifos nicht mehr als das fünffache beträgt, wenn eine 2,5 g Chlorpyrifos enthaltende Suspension mit Wasser auf ein Volumen von 250 ml verdünnt wird.

2. Insektizid nach Anspruch 1, wobei der Anteil an Chlorpyrifos in den Mikrokapseln 50 bis 90 Gew.-% beträgt.

3. Insektizid nach Anspruch 1 oder 2, wobei die Mikrokapseln in einem Anteil von 10 bis 50 Gew.-% in der wäßrigen Suspension vorliegen.

4. Insektizid nach einem der vorhergehenden Patentansprüche, wobei das Gewichtsverhältnis von Chlorpyrifos zu dem Prepolymeren 1:0,1 bis 1:1 beträgt, das Gewichtsverhältnis des Prepolymeren zu dem wasserlöslichen kationischen Harnstoffharz 1:0,01 bis 1:2,0 beträgt und das Gewichtsverhältnis des wasserlöslichen kationischen Harnstoffharzes zu dem anionischen oberflächenaktiven Mittel 1:0,025 bis 1:0,03 beträgt.

5. Insektizid nach einem der vorhergehenden Patentansprüche, wobei die Freisetzungscharakteristik des mikroverkapselten Chlorpyrifos in Wasser 0,3 bis 2,0 ppm beträgt.

6. Verwendung eines Insektizids nach einem der vorhergehenden Patentansprüche als Termitizid oder als Termitenrepellent.

**Revendications**

1. Insecticide comprenant une suspension aqueuse contenant :

   (i) 100 parties en poids de microcapsules comprenant du chlorpyrifos comme substance de noyau et une substance formant la paroi obtenue par polycondensation d'un prépolymère d'urée-formaldéhyde et/ou un prépolymère de mélamine-formaldéhyde en présence d'une résine urée cationique soluble dans l'eau et d'un tensioactif anionique,
   (ii) 0,5 à 2,0 parties en poids de gomme xanthane, et
   (iii) 0,5 à 25 parties en poids d'un tensioactif, le coefficient de sédimentation de la suspension diluée n'étant pas inférieur à 80% et la re-dispersibilité de ce chlorpyrifos microencapsulé n'étant pas supérieure à 5 fois lorsqu'une suspension contenant 2,5 g de chlorpyrifos est diluée avec de l'eau jusqu'à un volume de 250 ml.

2. Insecticide suivant la revendication 1, dans lequel la quantité de chlorpyrifos dans ces microcapsules est comprise entre 50 et 90% en poids.

3. Insecticide suivant les revendications 1 ou 2, dans lequel ces microcapsules sont présentes dans cette suspension aqueuse en une quantité comprise entre 10 et 50% en poids.

4. Insecticide suivant l'une quelconque des revendications précédentes, dans lequel le rapport du chlorpyrifos à ce prépolymère est compris entre 1 : 0,1 et 1 : 1 en poids, le rapport de ce prépolymère à cette résine urée cationique soluble dans l'eau est de 1 : 0,01 à 1 : 2,0 en poids et le rapport de cette résine urée cationique soluble dans l'eau à ce tensioactif anionique est de 1 : 0,025 à 1 : 0,03 en poids.

5. Insecticide suivant l'une quelconque des revendications précédentes, dans lequel la propriété de libération dans l'eau de ce chlorpyrifos microencapsulé est de 0,3 à 2,0 ppm.

6. Utilisation d'un insecticide suivant l'une quelconque des revendications précédentes en tant que termiticide ou agent repoussant les termites.